# NEW EUROPEAN PATENT SPECIFICATION

(11) **EP 2 772 339 B2**
(45) Date of publication and mention of the opposition decision: **14.12.2022**
(45) Mention of the grant of the patent: 16.05.2018
(21) Application number: 14156749.5
(22) Date of filing: 26.02.2014
(51) Int. Cl.: B28C 5/42, B60W 10/192, B60T 1/06, B60T 1/10, F16D 61/00

(54) **Concrete mixer truck with safety device**
Betonmischwagen mit Sicherheitsvorrichtung
Camion malaxeur de béton avec dispositif de sécurité

(30) Priority: 28.02.2013 IT MI20130307
(43) Date of publication of application: 03.09.2014
(73) Proprietor: Cifa S.P.A., 20030 Senago, Milano (IT)
(72) Inventor: Pirri, Nicola, 20146 Milano (IT); Zorzi, Emanuele, 20031 Cesano Maderno (MB) (IT); Cheli, Federico, 20144 Milano (IT); Mapelli, Ferdinando, 22057 Olginate (LC) (IT); Tarsitano, Davide, 21042 Caronno Pertusella (VA) (IT)
(74) Representative: Petraz, Gilberto Luigi

(56) References cited:
- EP-A1- 1 798 092
- EP-A1- 1 820 692
- EP-B1- 1 798 092
- DE-A1- 19 640 545
- GB-A- 837 375
- GB-A- 837 375
- JP-A- S59 167 342
- JP-A- 2003 226 192
- JP-A- 2003 232 304
- JP-A- 2010 149 635
- JP-A- 2010 149 638
- GÜNTHER MILLER: "Fahrmischer Bedienungsanleitung "SMART Control"", SCHWING STETTER, 2007

## Description

### FIELD OF THE INVENTION

The present invention concerns a concrete mixer truck provided with a safety device suitable to stop the rotation, when necessary, of the concrete mixing drum.

In particular, the safety device according to the invention is associated to the rotary drum when it is the type driven by an electric or electro-mechanical auxiliary device, distinct from the motor of the vehicle on which the drum is mounted.

### BACKGROUND OF THE INVENTION

Concrete mixer trucks are known which, using a rotary drum, transport concrete from a production plant to the building site where the concrete is used.

During both loading in the production plant and during transport to the building site, the concrete must be kept malleable, and therefore the rotary drum must be kept constantly rotating so that the concrete does not harden.

It is also known that, on arrival at the site, the concrete mixer truck sometimes has to wait its turn to unload. In this waiting step too, the drum must be kept constantly rotating.

It is also known that, before unloading, the concrete undergoes a homogenization process, and to obtain this the drum of the concrete mixer truck is made to rotate at maximum rotation speed.

It is also known that, when the concrete is unloaded, the drum is made to rotate in the opposite direction to the mixing direction.

Concrete mixer trucks are known in which the rotation of the drum is normally obtained by means of a hydraulic motor which is driven by a group of pumps made to rotate by a heat engine, which is usually diesel. The heat engine can also be the same one that moves the vehicle, or it can be an independent auxiliary heat engine.

A solution is also known, from documents JP-A-2003/226192, JP-A-2003/301802 and DE-U-20 2009 001416, in which the rotary drum of the concrete mixer truck is driven with the assistance of an electric motor.

In particular, JP-A-2003/226192 describes a concrete mixer truck provided with a rotary drum directly connected, by reduction means, to the electric motor. The electric motor is powered, depending on the functioning conditions, either by an electric energy generator directly driven by the heat engine of the concrete mixer truck, or by electric energy accumulation batteries.

Concrete mixer trucks are also known, for example described in the international patent application filed by Applicant on 25.01.2013 under PCT/IB2013/000091 (PCT'091), published as WO2013/111022 A1, in which it is possible to move the rotary drum by means of an auxiliary device comprising an electric motor connected to the drum itself. In particular, this solution provides to rotate the drum with energy accumulated and transformed into high-efficiency electric energy, with high electric yields, and guarantees considerable practicality and operating flexibility.

Furthermore, from the Italian patent application MI2013A000298, filed on 28.02.2013 in the name of the present Applicant, published as ITMI20130298, concrete mixer trucks are known in which an auxiliary electro-mechanical device allows both to rotate the mixing drum and also to move the vehicle or mean on which it is mounted.

Compared with traditionally powered ones, solutions using electric power, in particular the last two cited above, advantageously allow to limit the noise of the concrete mixer truck and to reduce both fuel consumption, for example diesel oil, and also pollutant emissions, for example carbon dioxide (CO₂) and particulate, as well as nitrogen oxides and mixtures thereof (NOₓ).

Nevertheless, there are many problems posed by the above solutions, in particular due to the use of an electric motor to drive the concrete mixing drum:
- when the electric motor is switched off, someone or something has to make the rotary drum rotate;
- in an emergency, the electric motor is deactivated and the system is not stopped quickly due to the great inertia of the system;
- if there is a malfunction of the electric drive of the rotary drum, or a part of it, the electric motor is free to rotate together with the rotary drum for a period of time, with the danger of an inversion of the motion or pendular motion.

In such cases as these, the mass of concrete inside the rotary drum confers an inertia effect on the motion of the drum.

In the not-infrequent case where there is a non-homogeneous distribution of the concrete in the drum, this can cause problems of leakage of material from inside the drum.

In any case, it is clear that the rotary drum rotating in an uncontrolled and uncontrollable manner is a danger for everything around it, including the operators, passers-by or curious onlookers.

In the state of the art, there are known also JP 2010 149635 A, which discloses a concrete mixer truck having a drum driven by an electric motor, and a drum speed reducer connected directly to the shaft of the motor to reduce the rotating speed of the shaft when rotating the drum; and GB 837.375 A, which discloses a concrete mixer truck provided with a locking switch which can act on a magnetic brake forming part of the transmission to lock the drum in a position in which filling hatch is at the top.

The purpose of the present invention is therefore to prevent the dangers described above, which can also entail serious consequences.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, a concrete mixer truck according to the present invention, which overcomes the limits of the state of the art in a new and innovative way, comprises at least a vehicle on which a concrete mixer is mounted, provided with a drum for mixing concrete, and an auxiliary electro-mechanical device having at least one electric motor mechanically connected to the drum in order to selectively make it rotate.

According to one form of embodiment, the concrete mixer truck comprises a safety device provided with at least one braking member mechanically connected, directly or indirectly, to the drum and configured to stop the rotation thereof, if there is no electric current to power the electric motor, or if there is a lack of control of the rotation itself by the auxiliary device.

In this way the advantage is obtained of increasing operating safety of the concrete mixer truck, preventing the onset of potentially dangerous conditions for people or things in proximity to the concrete mixer truck, in the event of lack of control of the rotation of the drum.

In advantageous forms of embodiment, the safety device is powered and driven by an electric service unit or a pneumatic service unit of the concrete mixer truck, at least one of which is commonly present on board the vehicle. The advantage is therefore obtained of freeing the functioning of the safety device from that of the auxiliary device.

According to the invention, at least one braking member is provided, acting directly on the drum.

According to a variant, at least one braking member is provided immediately upstream of the drum, acting directly or indirectly on the rotary shaft that makes the drum rotate.

In some forms of embodiment, the braking member is interposed between the electric motor and the drum, or between the electric motor and a speed reducer connected to the rotary shaft.

In other forms of embodiment, the braking member is integrated into the motor and cooperates directly with its rotor part.

According to another variant, the braking system is operated from the cabin and/or from one or more positions provided on the frame of the vehicle, by means of emergency switches.

The safety device also comprises a command and control unit which automatically drives at least one braking member when there is a malfunction or a rotation of the drum that is not consistent with the cycle phase in progress, if a certain threshold is exceeded, which can also be minimal in relation to an expected inactive state.

### BRIEF DESCRIPTION OF THE DRAWINGS

These and other characteristics of the present invention will become apparent from the following description of some example forms of embodiment, with reference to the attached drawings wherein:
- fig. 1 is a lateral and schematic view of a concrete mixer truck according to the present invention;
- fig. 2 is an enlarged view of a detail of fig. 1, according to another form of embodiment of the invention;
- figs. 3, 4 and 5 show alternative forms of embodiment of the present invention.

### DETAILED DESCRIPTION OF SOME FORMS OF EMBODIMENT

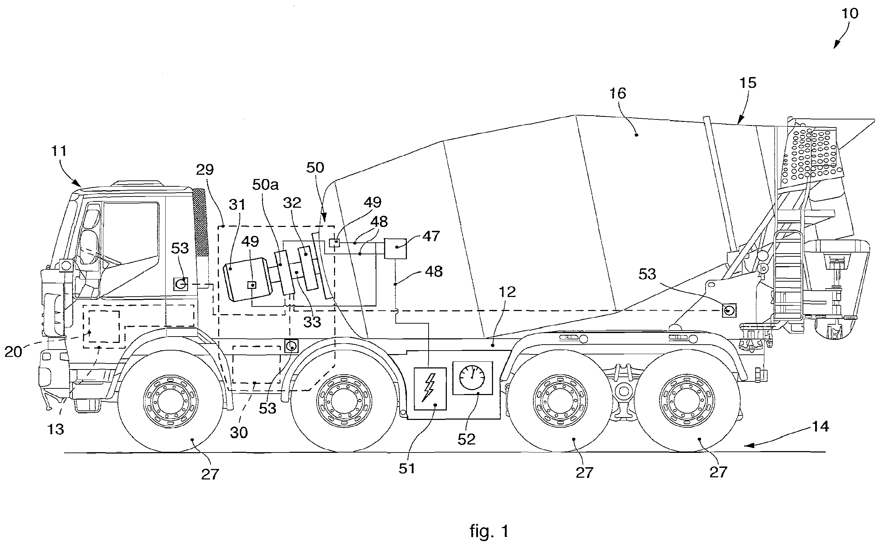

With reference to fig. 1, a concrete mixer truck 10 made according to the present invention comprises a vehicle 11, for example a truck, of any known type, provided with a frame 12 on which a rotary drum 16 of a concrete mixer 15 is mounted. For example, the capacity of the drum 16 is comprised between 4 cubic meters and 12 cubic meters.

The vehicle 11 is provided with a main motor unit 13 which comprises a heat engine 20, for example of the diesel type. The heat engine 20 is configured to make a movement unit 14, provided with drive wheels 27, rotate in a known manner.

The heat engine 20, which for example is able to deliver a power comprised between 250 kW and 350 kW, allows the vehicle 11 to move on the road by means of the movement unit 14, for example from the plant where the concrete is produced to a building site and vice versa.

An auxiliary device 29 of the electro-mechanical type is also mounted on the vehicle 11, and allows to keep the concrete in workable conditions and at the same time to move the vehicle 11 without needing to keep the heat engine 20 switched on.

The auxiliary device 29 comprises at least one electric energy generator unit 30, suitable to power an electric motor 31, for example of the three phase type, which is connected mechanically, for example by means of reduction members such as a speed reducer 32, to the drum 16. The motion is conferred on the latter by means of a rotary shaft 33, to which both the electric motor 31 and the speed reducer 32 are connected.

Reference should be made to the aforementioned patent applications PCT'091 and MI'298 for the detailed description of the composition and functioning of advantageous examples of electric generator unit 30 and auxiliary device 29.

In accordance with the description in said applications, the drum 16, or both the drum 16 and the concrete mixer truck 10 in its entirety, can be moved even when the heat engine 20 is switched off, thanks to the electric motor 31 and the drive energy supplied by the electro-mechanical auxiliary device 29.

The inventive idea according to the present application can also be applied to any other concrete mixer truck having an electric motor used to move the drum 16.

In this specific case, fig. 1 shows forms of embodiment of the concrete mixer truck 10 in which it also includes a safety device 50 associated with the auxiliary device 29. The safety device 50 is configured to stop the rotation of the drum 16 in potentially dangerous situations.

By potentially dangerous we mean the condition where the constraints on the rotation of the drum 16 fail, and the drum 16 can therefore rotate freely. This condition can occur if the electric motor 31 is not powered or is malfunctioning, which, due to the very nature of the electric motor 31 itself, allows the drum 16 free to move without constraints.

Possible causes of interruption of the electric power of the motor 31 can occur if its use is suspended, for example when the auxiliary device 29 is deactivated and the drum 16 is not required to rotate, or when there is a breakdown or malfunction of the auxiliary device 29 or one of its components connected to the functioning of the electric motor 31.

The electric power of the motor 31 can also fail if the concrete mixer truck 10 is involved in a road accident, or if it overturns. In these cases, and also for example in the event of skidding or lack of road-holding of the vehicle 11, in order to limit damage and leakage of concrete, the rotation of the drum 16 must be stopped.

In one of the situations cited above, the danger may derive from the fact that someone or something can rotate the drum 16, putting themselves and the surrounding area at risk due to the parts moving uncontrollably, which can even weigh hundreds of kilograms.

Another danger may be that the motion of the drum 16, if it is rotating at the moment when the constraints on its rotation are interrupted, can become unpredictable and uncontrollable, and for example inversions of motion and pendulum movements of the drum 16 can occur. These can cause the concrete contained in the drum 16 to leak out.

The safety device 50 is therefore configured to intervene in such situations, as will be specified hereafter in the description.

An electric service unit 51 is integrated in the vehicle 11 of the concrete mixer truck 10 shown in the attached drawings, as normally happens in means of transport. The electric service unit 51 is autonomous and independent from the circuit of the auxiliary device 29 and dedicated to powering the service user devices of the vehicle 11 itself.

The drawings also show schematically a pneumatic service unit 52, dedicated to the pneumatic feed of some components of the vehicle 11, such as for example the brakes.

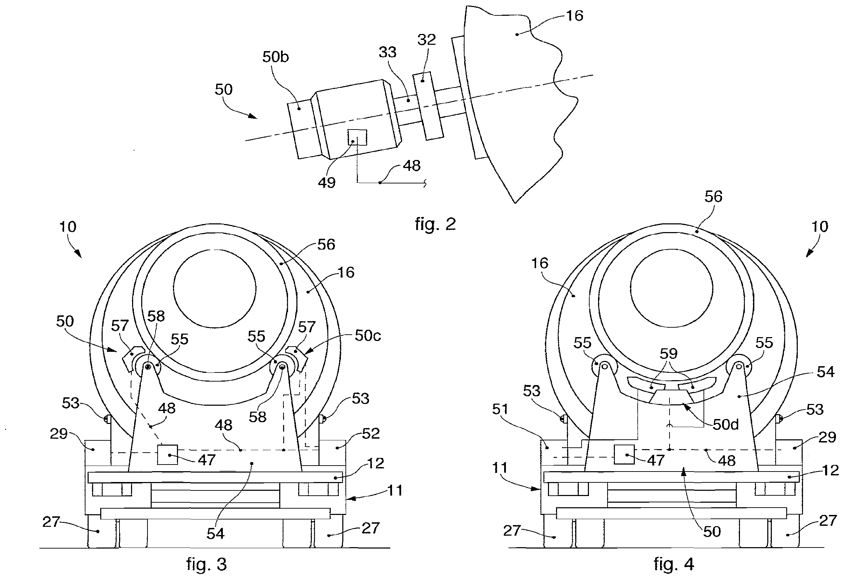

Some forms of embodiment of the invention (figs. 1 and 4) provide that the safety device 50 is electrically driven and commanded by the electric service unit 51.

Alternative forms of embodiment (fig. 3) provide that the safety device 50 is pneumatically driven and commanded by the pneumatic service unit 52.

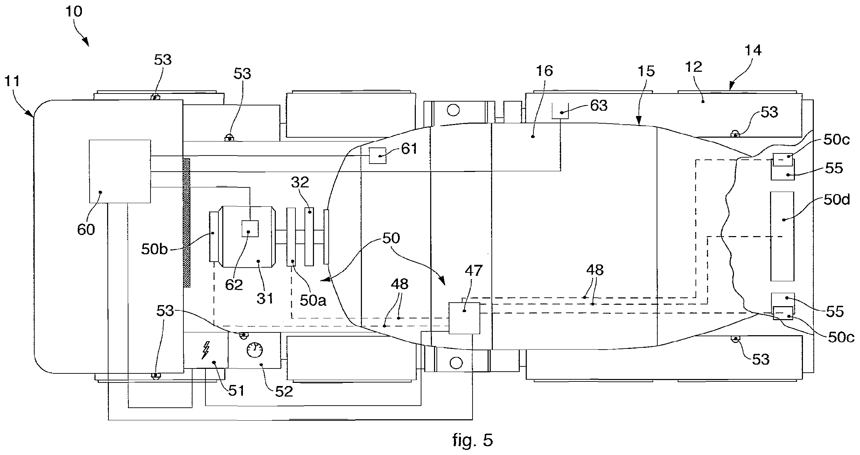

According to the invention, the safety device 50 includes at least one braking member which in the attached drawings, depending on its position in the concrete mixer truck 10, has been indicated by the reference numbers 50a (figs. 1 and 5), 50b (figs. 2 and 5), 50c (figs. 3 and 5), 50d (figs. 4 and 5).

In preferential forms of embodiment, the braking member 50a, 50b, 50c, 50d is configured to be normally in the activated condition, that is, stopping the drum 16. The deactivation of the braking member 50a, 50b, 50c, 50d to free the rotation of the drum 16 can only occur following a deactivation command.

This command can be imparted by a selective activation/deactivation device 47 connected to the braking member 50a, 50b, 50c, 50d and the auxiliary device 29 by means of an activation/deactivation circuit 48.

In some forms of embodiment, the selective activation/deactivation device 47 is connected only to the electric motor 31, to control the functioning thereof. The selective activation/deactivation device 47 includes control means 49 to control the auxiliary device 29, which can comprise for example a detector to detect an on/off condition of the auxiliary device 29 or the electric motor 31, or also a device to measure the voltage or current associated with the electric motor 31 itself.

If the control means 49 detect that the auxiliary device 29 or the electric motor 31 are switched on, they send a signal consistent with such condition to the selective activation/deactivation device 47, which imparts the deactivation command to the braking member 50a, 50b, 50c, 50d. The deactivation allows the motor 31 to make the drum 16 rotate.

In the event that the auxiliary device 29 or only the electric motor 31 malfunctions or is switched off, the control means 49 send a signal relating to this anomaly to the selective activation/deactivation device 47, which automatically removes the deactivation command from the braking member 50a, 50b, 50c, 50d. The removal of the command causes the automatic activation of the braking member 50a, 50b, 50c, 50d, which stops the rotation of the drum 16.

In this way, in the potentially dangerous situations as described above, the rotation of the drum 16 is always prevented as a safety measure.

In some forms of embodiment, not shown in the attached drawings, but which can be combined with those described above, the command to deactivate the braking member 50a, 50b, 50c, 50d can be imparted manually by an operator, intervening mechanically on the braking member 50a, 50b, 50c, 50d itself.

The connection to said two service units 51 and 52, autonomous and separate with respect to the auxiliary device 19, confers reliability to the safety device 50, since it allows both the selective activation/deactivation device 47 and also the braking member 50a, 50b, 50c, 50d to intervene independently of the functioning condition of the auxiliary device 19 and the corresponding electric energy generator unit 30.

In some forms of embodiment, the power fed to the safety device 50 can be entrusted completely to the service units 51, 52, which intervene respectively with electric or pneumatic impulses when the electric power of the motor 31 fails.

With specific reference to fig. 1, the braking member 50a is connected to the rotary shaft 33, and put in an intermediate position between the electric motor 31 and the speed reducer 32. In this way, the braking member 50a can intervene in the cases, cited above, of breakdown or malfunction of the auxiliary device 29 or the electric motor 31, and can directly interrupt the rotation of the rotary shaft 33 and hence of the drum 16.

It may in fact be provided that the braking member 50a is an electro-brake, actuated by means of an electromagnet with return spring.

Alternative forms of embodiment provide that the braking member 50a is for example a pneumatically driven brake commanded by the pneumatic service unit 52, for example by means of a pneumatic actuator with a return spring.

In other forms of embodiment, which can be combined with forms of embodiment described here, the safety device 50 also includes one or more emergency switches 53 on which an operator can act in an emergency. In the case shown by way of example in fig. 1, the emergency switches 53 are positioned in correspondence with the cabin of the vehicle 11, or can be associated to the frame 12 of the vehicle 11 in proximity to the zone of the electric motor 31 or in proximity to the rear operating zone of the concrete mixer 15.

The emergency switches 53 can advantageously be electrically or pneumatically driven and connected respectively to the electric service unit 51 or pneumatic service unit 52 of the vehicle 11.

The intervention of the operator on an emergency switch 53 cancels the deactivation command of the braking member 50a, causing the automatic activation thereof so as to interrupt the rotation of the drum 16. This intervention on the emergency switch 53 can also cause the electric motor 31 to be switched off.

Fig. 2 shows a variant solution of the present invention, where the safety device 50 comprises a braking member 50b integrated into the electric motor 31 and cooperating with the rotor part thereof. In this specific case, the braking member 50b is positioned for example in the rear part thereof. The safety device 50 in this case functions in the same way as described above.

In both the cases described above, the safety device 50 can use any known braking technology whatsoever to stop the rotation of the drum 16, and the braking member 50a, or 50b, can be for example the disc type, or drum type, or electro-magnetic, or again the combined brake-clutch type.

Figs. 3 and 4 show schematically forms of embodiment of the concrete mixer truck 10 which show a support frame 54 and a pair of support rolls 55, configured to support the drum 16 and rotating around a rotation pin 58.

The support frame 54 in this case is attached to the frame 12 of the vehicle 11 and the support rolls 55 are positioned on the top of the support frame 54, in contact with the drum 16.

In correspondence with the band of contact on which the support rolls 55 act, the drum 16 is provided with a rolling track 56 which, being part of the drum 16 in contact with the support rolls 55, is advantageously more resistant to rolling friction and to mechanical loads, compared with the rest of the drum 16.

In the forms of embodiment described with reference to fig. 3, the safety device 50 comprises a braking member 50c mechanically connected to the support rolls 55. The braking member 50c can be the drum type, and have jaws 57 that act on the outside of the support rolls 55. Analogous forms of embodiment, not shown in the drawings, provide that the safety device 50 is the drum type with jaws 57 acting inside the support rolls 55, or the disc type, or electromagnetic, or again the combined brake-clutch type, and can act on the rotation pin 58 of the corresponding support roll 55.

The activation of the braking member 50c by the selective activation/ deactivation device 47, in the absence of power of the electric motor 31, takes the jaws 57 into contact with a surface, internal or external, of each support roll 55, or with the corresponding rotation pin 58, causing the drum 16 to stop through friction.

In these forms of embodiment too, the braking member 50c can be driven electrically, if the safety device 50 is connected to the electric service unit 51, or pneumatically, if the safety device 50 is connected to the pneumatic service unit 52.

In other forms of embodiment, shown schematically in fig. 4, the safety device 50 includes a braking member 50d configured to intervene directly on the rolling track 56. In the case shown here by way of example, the braking member 50d is the type with blocks 59, configured to enter into contact with the rolling track 56 in said potentially dangerous situations and to interrupt, through friction, the rotation of the rotary drum 16.

The invention also concerns safety devices 50 acting on the rolling track by means of braking members 50d of one of the braking types mentioned above, as an alternative to the solution with blocks 59 given by way of example in fig. 4.

In both fig. 3 and in fig. 4, the safety device 50 includes emergency switches 53, which can be driven by an operator in an emergency to activate the corresponding braking members 50c or 50d and stop the drum 16.

Fig. 5 shows a plan view of a form of embodiment in which the concrete mixer truck 10 includes a safety device comprising a plurality of braking members, in this case one (50a) interposed between the electric motor 31 and the speed reducer 32, one (50b) integrated in the rear of the electric motor 31, one (50c) associated with the support rolls 55 and one (50d) associated with the rolling track 56.

This solution is given merely by way of example and can be indicative of the fact that the forms of embodiment described above can be combined with each other, depending on requirements.

In addition to the above, the safety device 50 for the concrete mixer truck 10 shown in fig. 5 also includes a command and control unit 60, connected electronically to the auxiliary device 29, the selective activation/deactivation device 47 and the drum 16.

The command and control unit 60 can be electrically powered by the electric service unit 51, so as not to be affected by possible malfunctions of the auxiliary device 29 and its electric energy generator unit 30.

The command and control unit 60 is configured to control one or more of the following components of the concrete mixer truck 10:
- the drum 16, for example controlling the actual number of revs and direction of rotation, possibly by means of a rotation sensor 61, for example magnetic, attached to the drum 16;
- the electric motor 31, for example controlling its speed by means of an encoder 62, or the electric power or the drive torque;
- the vehicle 11, for example monitoring its road-holding and lateral inclination by means of a skid sensor 63 connected to the movement unit 14 and/or the frame 12.

Furthermore, based on said control, the command and control unit 60 is able to identify whether potentially dangerous conditions have been reached, and to send a signal to the selective activation/deactivation device 47 to remove the deactivation command from one or more of the braking members 50a-50d, in order to stop the rotation of the drum 16.

For each of the components of the concrete mixer truck 10 indicated above and for each operating step of the truck 10, the command and control unit 60 is able to detect possible discrepancies from the normal functioning of the individual component in the specific operating step.

In some forms of embodiment, the command and control unit 60 provides to command the drive of one or more of the braking members 50a-50d only when a predetermined discrepancy threshold from normal functioning has been exceeded.

The command and control unit 60 can for example intervene in activating the braking members 50-50d in the event of a too rapid or too slow rotation of the drum 16, or inversion in the direction of rotation when not required, or pendular motion.

It can also intervene in the event of a malfunction of the auxiliary device 29 or the electric motor 31, if such malfunction, for example determining excess power or torque absorbed, can constitute a risk for the mechanical resistance of the electric motor 31 or can compromise the control of the rotation of the drum 16.

It is also possible for the command and control unit 60 to send a signal to the selective activation/deactivation device 47 in order to activate one or all the braking members 50a-50d if it detects the vehicle 11 skidding as it travels on the road, or if it detects an excessive lateral inclination thereof, for example if it is about to overturn.

It is clear that modifications and/or additions of parts may be made to the concrete mixer truck 10 as described heretofore, without departing from the field and scope of the present invention.

It is also clear that, although the present invention has been described with reference to a specific example, a person of skill in the art shall certainly be able to achieve many other equivalent forms of concrete mixer truck, having the characteristics as set forth in the claims and hence all coming within the field of protection defined thereby.

## Claims

1. Concrete mixer truck comprising at least a vehicle (11) on which a concrete mixer (15) is mounted, provided with a mixing drum (16) for concrete, and an auxiliary electro-mechanical device (29) having at least one electric motor (31) connected mechanically to said mixing drum (16) to make it selectively rotate, the concrete mixer truck further comprising a safety device (50) provided with at least one braking member (50a, 50b, 50c, 50d) connected to said mixing drum (16) and configured to stop the rotation thereof, and with a selective activation/deactivation device (47) to selectively activate/deactivate said braking member (50a, 50b, 50c, 50d) connected to said auxiliary electro-mechanical device (29) and to said braking member (50a, 50b, 50c, 50d) by means of an activation/deactivation circuit (48), **characterized in that** the concrete mixer truck further comprising an electric service unit (51) and/or a pneumatic service unit (52), independent and autonomous with respect to said auxiliary electro-mechanical device (29), said safety device (50) is fed and driven by said electric service unit (51) or by said pneumatic service unit (52), and **in that** said selective activation/deactivation device (47) is governed by control means (49) to control the functioning of said auxiliary electro-mechanical device (29) and of said electric motor (31), and is operationally coordinated at least to a condition of breakdown of said electric motor (31).

2. Concrete mixer truck as in any claim 1, wherein said electric motor (31) is connected to said mixing drum (16) by means of a rotating shaft (33), **characterized in that** said at least one braking member (50a) is connected directly to said rotating shaft (33), in an intermediate position between said electric motor (31) and said mixing drum (16).

3. Concrete mixer truck as in claim 2, wherein a speed reducer (32) is interposed between said electric motor (31) and said mixing drum (16), **characterized in that** said at least one braking member (50a) is connected to said rotating shaft (33) in an intermediate position between said electric motor (31) and said speed reducer (32).

4. Concrete mixer truck as in any claim 1 to 3, **characterized in that** said at least one braking member (50b) is integrated inside said electric motor (31) and cooperates with the rotor part of the latter.

5. Concrete mixer truck as in any claim 1 to 4, wherein said mixing drum (16) is supported by support rolls (55), rotating around a rotation pin (58), **characterized in that** said at least one braking member (50c) is associated to at least one of said support rolls (55) and cooperates with an external part, an internal part or with a rotation pin (58) of at least one of said support rolls (55).

6. Concrete mixer truck as in claim 5, wherein said support rolls (55) rest on a rolling strip or track (56) of said mixing drum (16), **characterized in that** said at least one braking member (50d) is associated to said rolling track (56) in order to stop the rotation of said mixing drum (16) by friction.

7. Concrete mixer truck as in any claim 1 to 6, **characterized in that** said at least one braking member (50a-50d) is a type chosen from a group comprising drum, disk, electromagnetic, combined brake-clutch type, **and in that** said braking member (50a-50d) is configured mechanically to be normally activated, and to pass to a deactivation condition, in order to free the rotation of the mixing drum (16), following an electric or pneumatic command received from said selective activation/deactivation device (47).

8. Concrete mixer truck as in claim 7, **characterized in that** said safety device (50) comprises at least an emergency switch (53) associated with the frame (12) of the vehicle (11) and connected to said electric service unit (51) or to said pneumatic service unit (52) and to the at least one braking member (50a-50d) in order to transmit an activation signal of said at least one braking member (50a-50d) in an emergency.

9. Concrete mixer truck as in any claim 1 to 8, **characterized in that** said safety device (50) comprises a control and command unit (60), connected at least to the mixing drum (16), in order to control at least the direction of rotation and number of revolutions thereof, and to said at least one braking member (50a-50d), in order to command the activation and to stop the rotation of said mixing drum (16) with the onset of functioning anomalies, said control and command unit (60) also being connected to at least one of either the auxiliary electro-mechanical device (29), to control at least the functioning state thereof, or the electric motor (31), to control at least the presence of electric voltage, or the vehicle (11), to monitor at least the road holding and the lateral inclination thereof.

## Patentansprüche

1. Transportbetonmischer, aufweisend mindestens ein Fahrzeug (11), auf dem ein Betonmischer (15) montiert ist, der mit einer Mischtrommel (16) für Beton versehen ist, und eine elektromechanische Hilfsvorrichtung (29) mit mindestens einem Elektromotor (31), der mechanisch mit der Mischtrommel (16) verbunden ist, um sie selektiv in Drehung zu versetzen, wobei der Transportbetonmischer ferner eine Sicherheitsvorrichtung (50) aufweist, die mit mindestens einem Bremselement (50a, 50b, 50c, 50d), das mit der Mischtrommel (16) verbunden und dafür ausgelegt ist, deren Drehung anzuhalten, und mit einer selektiven Aktivierungs-/Deaktivierungsvorrichtung (47) zum selektiven Aktivieren/Deaktivieren des Bremselements (50a, 50b, 50c, 50d) versehen ist, die durch eine Aktivierungs-/Deaktivierungsschaltung (48) mit der elektromechanischen Hilfsvorrichtung (29) und dem Bremselement (50a, 50b, 50c, 50d) verbunden ist, **dadurch gekennzeichnet, dass** der Transportbetonmischer ferner eine elektrische Service-Einheit (51) und/oder eine pneumatische Service-Einheit (52) aufweist, die unabhängig und autonom in Bezug auf die elektromechanische Hilfsvorrichtung (29) sind, wobei die Sicherheitsvorrichtung (50) von der elektrischen Service-Einheit (51) oder von der pneumatischen Service-Einheit (52) versorgt und angetrieben wird, und dass die selektive Aktivierungs-/Deaktivierungsvorrichtung (47) von einer Steuereinrichtung (49) geregelt wird, um die Funktion der elektromechanischen Hilfsvorrichtung (29) und des Elektromotors (31) zu steuern, und operativ zumindest auf einen Zustand des Ausfalls des Elektromotors (31) koordiniert ist.

2. Transportbetonmischer nach Anspruch 1, wobei der Elektromotor (31) über eine Drehwelle (33) mit der Mischtrommel (16) verbunden ist, **dadurch gekennzeichnet, dass** das mindestens eine Bremselement (50a) in einer Zwischenposition zwischen dem Elektromotor (31) und der Mischtrommel (16) direkt mit der Drehwelle (33) verbunden ist.

3. Transportbetonmischer nach Anspruch 2, wobei ein Reduktionsgetriebe (32) zwischen dem Elektromotor (31) und der Mischtrommel (16) zwischengefügt ist, **dadurch gekennzeichnet, dass** das mindestens eine Bremselement (50a) in einer Zwischenposition zwischen dem Elektromotor (31) und dem Reduktionsgetriebe (32) mit der Drehwelle (33) verbunden ist.

4. Transportbetonmischer nach einem der Ansprüche 1 bis 3, **dadurch gekennzeichnet, dass** das mindestens eine Bremselement (50b) in dem Elektromotor (31) integriert ist und mit dem Rotorteil des letzteren zusammenwirkt.

5. Transportbetonmischer nach einem der Ansprüche 1 bis 4, wobei die Mischtrommel (16) von Stützrollen (55) getragen wird, die sich um einen Drehstift (58) drehen, **dadurch gekennzeichnet, dass** das mindestens eine Bremselement (50c) mindestens einer der Stützrollen (55) zugeordnet ist und mit einem äußeren Teil, einem inneren Teil oder mit einem Drehstift (58) von mindestens einer der Stützrollen (55) zusammenwirkt.

6. Transportbetonmischer nach Anspruch 5, wobei die Stützrollen (55) auf einem Rollstreifen oder einer Rollbahn (56) der Mischtrommel (16) ruhen, **dadurch gekennzeichnet, dass** das mindestens eine Bremselement (50d) der Rollbahn (56) zugeordnet ist, um die Drehung der Mischtrommel (16) durch Reibung anzuhalten.

7. Transportbetonmischer nach einem der Ansprüche 1 bis 6, **dadurch gekennzeichnet, dass** das mindestens eine Bremselement (50a-50d) von einer Art ist, die ausgewählt ist aus einer Gruppe aufweisend eine Trommelbremse, eine Scheibenbremse, eine elektromagnetische Bremse, eine Bremsen-Kupplungskombination, und dass das Bremselement (50a-50d) mechanisch dafür ausgelegt ist, normal aktiviert zu werden und in einen Deaktivierungszustand überzugehen, um die Drehung der Mischtrommel (16) zuzulassen, nachdem ein elektrischer oder pneumatischer Befehl von der selektiven Aktivierungs-/Deaktivierungsvorrichtung (47) empfangen wurde.

8. Transportbetonmischer nach Anspruch 7, **dadurch gekennzeichnet, dass** die Sicherheitsvorrichtung (50) mindestens einen Notschalter (53) aufweist, der dem Rahmen (12) des Fahrzeugs (11) zugeordnet und mit der elektrischen Service-Einheit (51) oder der pneumatischen Service-Einheit (52) und mit dem mindestens einen Bremselement (50a-50d) verbunden ist, um in einem Notfall ein Aktivierungssignal des mindestens einen Bremselements (50a-50d) zu übertragen.

9. Transportbetonmischer nach einem der Ansprüche 1 bis 8, **dadurch gekennzeichnet, dass** die Sicherheitsvorrichtung (50) eine Steuer- und Befehlseinheit (60) aufweist, die zumindest mit der Mischtrommel (16) verbunden ist, um zumindest die Drehrichtung und die Anzahl von Umdrehungen von dieser zu steuern, und mit dem mindestens einen Bremselement (50a-50d) verbunden ist, um die Aktivierung zu befehlen und die Drehung der Mischtrommel (16) bei Auftreten von Funktionsanomalien anzuhalten, wobei die Steuer- und Befehlseinheit (60) auch mit mindestens einem von entweder der elektromechanischen Hilfsvorrichtung (29), um zumindest deren Funktionszustand zu steuern, oder dem Elektromotor (31), um zumindest das Vorliegen einer elektrischen Spannung zu steuern, oder dem Fahrzeug (11) verbunden ist, um zumindest die Straßenlage und die seitliche Neigung von diesem zu überwachen.

## Revendications

1. Camion malaxeur de béton comprenant au moins un véhicule (11) sur lequel une bétonnière (15) est montée, pourvu d'un tambour mélangeur (16) pour béton, et un dispositif auxiliaire électromécanique (29) ayant au moins un moteur électrique (31) connecté mécaniquement audit tambour mélangeur (16) pour le faire tourner sélectivement, le camion malaxeur de béton comprenant en outre un dispositif de sécurité (50) pourvu d'au moins un organe de freinage (50a, 50b, 50c, 50d) connecté audit tambour mélangeur (16) et configuré pour stopper la rotation de celui-ci, et d'un dispositif d'activation/désactivation sélective (47) pour activer/désactiver sélectivement ledit organe de freinage (50a, 50b, 50c, 50d) connecté audit dispositif auxiliaire électromécanique (29) et audit organe de freinage (50a, 50b, 50c, 50d) au moyen d'un circuit d'activation/désactivation (48), **caractérisé en ce que** le camion malaxeur de béton comprend en outre une unité de service électrique (51) et/ou une unité de service pneumatique (52), indépendante(s) et autonome(s) par rapport audit dispositif auxiliaire électromécanique (29), ledit dispositif de sécurité (50) est alimenté et actionné par ladite unité de service électrique (51) ou par ladite unité de service pneumatique (52), **et en ce que** ledit dispositif d'activation/désactivation sélective (47) est piloté par des moyens de commande (49) pour commander le fonctionnement dudit dispositif auxiliaire électromécanique (29) et dudit moteur électrique (31), et est coordonné opérationnellement au moins à un état de panne dudit moteur électrique (31).

2. Camion malaxeur de béton selon la revendication 1, dans lequel ledit moteur électrique (31) est connecté audit tambour mélangeur (16) au moyen d'un arbre tournant (33), **caractérisé en ce que** ledit ou lesdits organes de freinage (50a) est/sont connecté(s) directement audit arbre tournant (33), dans une position intermédiaire entre ledit moteur électrique (31) et ledit tambour mélangeur (16).

3. Camion malaxeur de béton selon la revendication 2, dans lequel un réducteur de vitesse (32) est interposé entre ledit moteur électrique (31) et ledit tambour mélangeur (16), **caractérisé en ce que** ledit ou lesdits organe(s) de freinage (50a) est/sont connecté(s) audit arbre tournant (33) dans une position intermédiaire entre ledit moteur électrique (31) et ledit réducteur de vitesse (32).

4. Camion malaxeur de béton selon l'une quelconque des revendications 1 à 3, **caractérisé en ce que** ledit ou lesdits organe(s) de freinage (50b) est/sont intégré(s) à l'intérieur dudit moteur électrique (31) et coopère avec la partie formant rotor de ce dernier.

5. Camion malaxeur de béton selon l'une quelconque des revendications 1 à 4, dans lequel ledit tambour mélangeur (16) est supporté par des rouleaux de support (55) tournant autour d'une tige de rotation (58), **caractérisé en ce que** ledit ou lesdits organe(s) de freinage (50c) est/sont associé(s) à l'un au moins desdits rouleaux (55) et coopère(nt) avec une partie extérieure, une partie intérieure ou avec une tige de rotation (58) d'au moins l'un desdits rouleaux de support (55).

6. Camion malaxeur de béton selon la revendication 5, dans lequel lesdits rouleaux de support (55) reposent sur une bande ou piste (56) de roulement dudit tambour mélangeur (16), **caractérisé en ce que** ledit ou lesdits organe(s) de freinage (50d) est/sont associé(s) à ladite piste de roulement (56) afin de stopper la rotation dudit tambour mélangeur (16) par friction.

7. Camion malaxeur de béton selon l'une quelconque des revendications 1 à 6, **caractérisé en ce que** ledit ou lesdits organe(s) de freinage (50a-50d) est/sont d'un type choisi dans le groupe comprenant un tambour, un disque, le type électromagnétique, le type combiné frein/embrayage, **et en ce que** ledit organe de freinage (50a-50d) est configuré mécaniquement pour être normalement activé et pour passer à un état de désactivation, afin de libérer la rotation du tambour mélangeur (16), suite à une commande électrique ou pneumatique reçue dudit dispositif d'activation/désactivation sélective (47).

8. Camion malaxeur de béton selon la revendication 7, **caractérisé en ce que** ledit dispositif de sécurité (50) comprend au moins un commutateur d'urgence (53) associé avec le cadre (12) du véhicule (11) et connecté à ladite unité de service électrique (51) ou à ladite unité de service pneumatique (52) et au(x)dit(s) organe(s) de freinage (50a-50d) afin de transmettre un signal d'activation dudit ou desdits organe(s) de freinage (50a-50d) en cas d'urgence.

9. Camion malaxeur de béton selon l'une quelconque des revendications 1 à 8, **caractérisé en ce que** ledit dispositif de sécurité (50) comprend une unité de contrôle et de commande (60) connectée au moins audit tambour mélangeur (16), afin de commander au moins le sens de rotation et le nombre de tours de celui-ci, et au(x)dit(s) organe(s) de freinage (50a-50d), afin de commander l'activation et de stopper la rotation dudit tambour mélangeur (16) en cas d'apparition d'anomalies de fonctionnement, ladite unité de contrôle et de commande (60) étant également connectée à l'un au moins du dispositif auxiliaire électromécanique (29), pour contrôler au moins l'état de fonctionnement de celui-ci, le moteur électrique (31), pour contrôler au moins la présence de tension électrique de celui-ci, et le véhicule (11), pour surveiller au moins la tenue de route et l'inclinaison latérale de celui-ci.
